# EUROPEAN PATENT APPLICATION

(11) **EP 1 968 215 A2**
(43) Date of publication of application: **10.09.2008**
(21) Application number: 08102338.4
(22) Date of filing: 06.03.2008
(51) Int. Cl.: H04B 10/155

(54) **Apparatus and method for light intensity modulation and optical transmission system employing the same**

(30) Priority: 07.03.2007 JP 2007056497
(71) Applicant: NEC CORPORATION, Tokyo (JP)
(72) Inventor: Yano, Yutaka, Tokyo (JP)
(74) Representative: Betten & Resch

(57) **Abstract**

A multilevel light intensity modulation system can generate a multilevel modulated optical signal from a single light source without handling multilevel electrical signals. The light from a light source 1 is branched by a Y-branch 40 into two light beams, which are phase-modulated by phase modulation sections 41, 42 with two sequences each of a bi-level electrical signal. The phase-modulated light beams are coupled by a directive coupler 43 to generate intensity-modulated output light beam. Phase modulation sections 41, 42 provide a phase difference between the branched light beams approximately of 0, (3/8)π, (5/8)π and π depending on level combinations of the two sequences each composed of a bi-level electrical signal. This enables multilevel light modulation in the light domain.

## Description

### FIELD OF THE INVENTION

### (REFERENCE TO RELATED APPLICATION)

The present application is claiming the priority of the earlier Japanese patent application No. 2007-056497 filed on March 07, 2007, the entire disclosure thereof being incorporated herein by reference thereto.
This invention relates to apparatus and methods for light intensity modulation and to an optical transmission system employing the same. More particularly, this invention relates to multilevel modulation in an optical transmission system.

### BACKGROUND ART

What supports the distance aspect of the present-day trunk communication network is the optical transmission system employing an optical fiber as a transmission medium. The modulation system, routinely used at present for this system, is the on-off keying of NRZ codes, in which the state of 'absence' or 'existence' of the light intensity is created in association with a "0" bit or a "1" bit of a digital signal, desired to be transmitted, and these states are transmitted. In this case, the light intensity is in two stages of 'absence' or 'existence'.

In contrast, there has so far been made a report that several merits may be derived by increasing the number of stages (levels) of the light intensity to more than two. This technology is disclosed in, Non-Patent Document 1, for instance. A multilevel modulated light signal generator and a digital signal decoder, disclosed in this Publication, are now described with reference to Figs.14A and 14B.

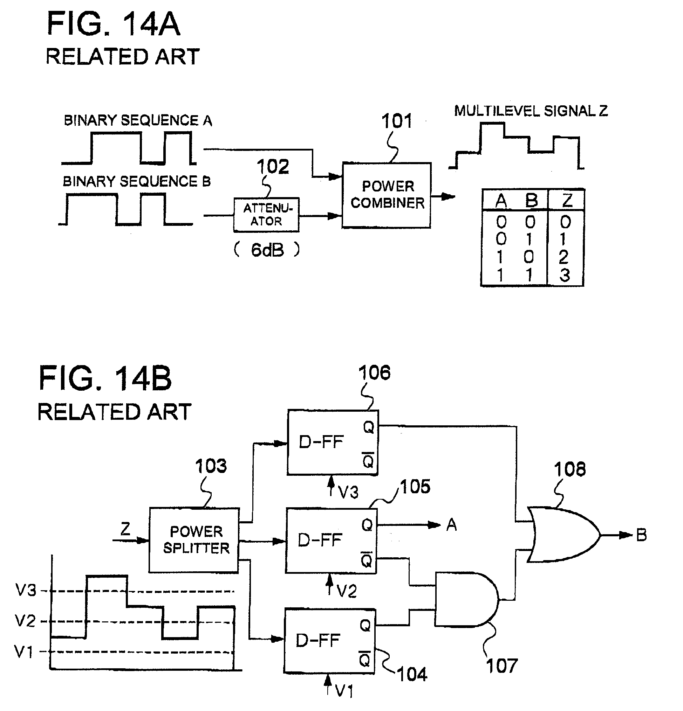

Fig.14A illustrates a unit for generating a multilevel modulated optical signal. Two sequences of digital electrical signals (binary sequences A and B) are delivered as inputs. One of these signal sequences is passed through an attenuator 102 so that its signal amplitude will be halved as compared with the other, In this case, the signal is the voltage signal, so that a 6dB attenuator 102 is used. The two sequences of the electrical signals are combined in a power combiner 101 so that a four-level electrical signal is obtained at an output. This electrical signal is transmitted as it is modulated in intensity so that the four levels of the electrical signal will be allocated to four light power levels. In a light receiver, the four levels of the light power are converted by a photoelectric transducer, such as a photodiode, into four levels of an electrical signal.

Fig,14B illustrates a digital signal decoder. The four-level electrical signal(Z) received is divided by a power splitter 103 into three signals, which are delivered to discriminators 104 to 106 for level discrimination. These three discriminators 104 to 106 have respective discrimination threshold levels V1 to V3 set to mid levels between relevant two of the four amplitude stages. One (A) of the original digital signal sequences is restored by the result of discrimination (Q-output) of the discriminator 105 with a threshold level V2. A logical product of an inverted output of this Q-output and the result of discrimination (Q-output) of the discriminator 104 with a threshold level V1 is taken by an AND gate 107, and a logical sum of the resulting logical product and the result of discrimination (Q-output) of the discriminator 106 with the threshold level V3 is taken by an OR gate 108. This restores the other (B) of the original two digital signal sequences.

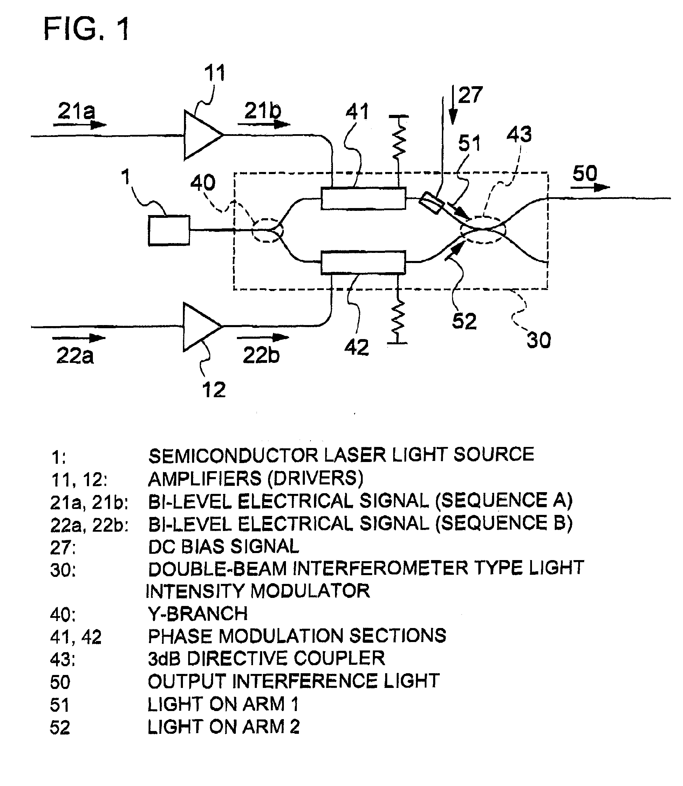

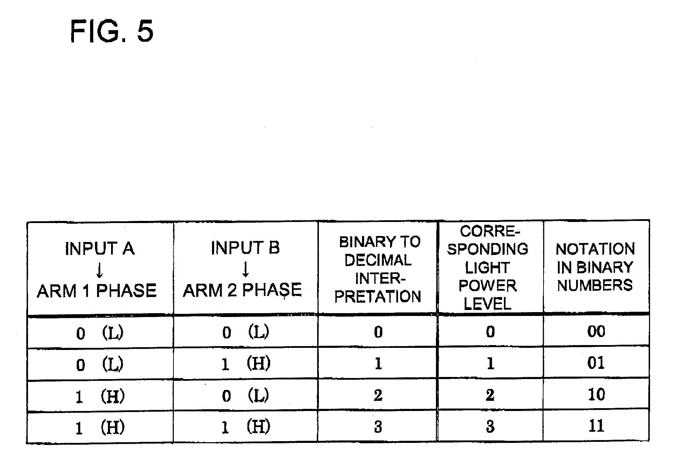

The operation of this decoder may also be explained as follows: The amplitude of the four-level signal received is quantized by a high-speed A/D converter. To express four power levels, an A/D converter with two bits at the minimum suffices. The first and second digits of a binary representation of the two-bit output level correspond to the original binary signal. This is shown in Fig,5. It should be noted that Fig.5 is valid for the present exemplary embodiment (see Fig.1) as well and that 'ARM 1 PHASE' and 'ARM 2 PHASE' indicated in Fig.5 are also valid for Fig. 1.

The above-described multilevel modulated light signal generator generates a multilevel signal, herein a four-level signal, in the state of an electrical signal. The technique of generating the multilevel signal in the optical state will now be described. An example of the routinely used chirpless light intensity modulator is a dual drive double-beam interferometer type intensity modulator (for example, see Patent Document 1). This double-beam interferometer type intensity modulator is shown in a block diagram of Fig.1, in which a double-beam interferometer type intensity modulator 30 constitutes a double-beam interferometer by optical waveguides generated by diffusing titanium on a LiNbO3 substrate.

Two arms of the interferometer are provided with phase modulation sections 41, 42 including mounted thereon electrodes, not shown, so that an electrical field will be applied thereto from outside. An electrical signal, delivered from outside, is propagated as a travelling wave through each of the phase modulation sections 41, 42 that operate as waveguides for electricity. The electrical signal applies phase modulation to the light propagating below the electrical signal until the signal is terminated at a terminator for electricity, The waveguide for electricity and the waveguide for light are designed so as to assure equal propagation speeds for electricity and for light, respectively.

The light emanating from a light source 1 is split into two light beams by a Y-branch to travel through the phase modulation sections 41, 42 where the light beams are subjected to phase modulation by signal sequences 21b, 22b, respectively. These are signal sequences passed through drivers 11, 12 for two sequences of binary signals 21a, 22a, respectively. The light beam on the arm 1 travels through a section that applies DC bias 27, and interferes with light beam on the arm 2 by a directive coupler 43. One of outputs of the directive coupler becomes output interference light 50.

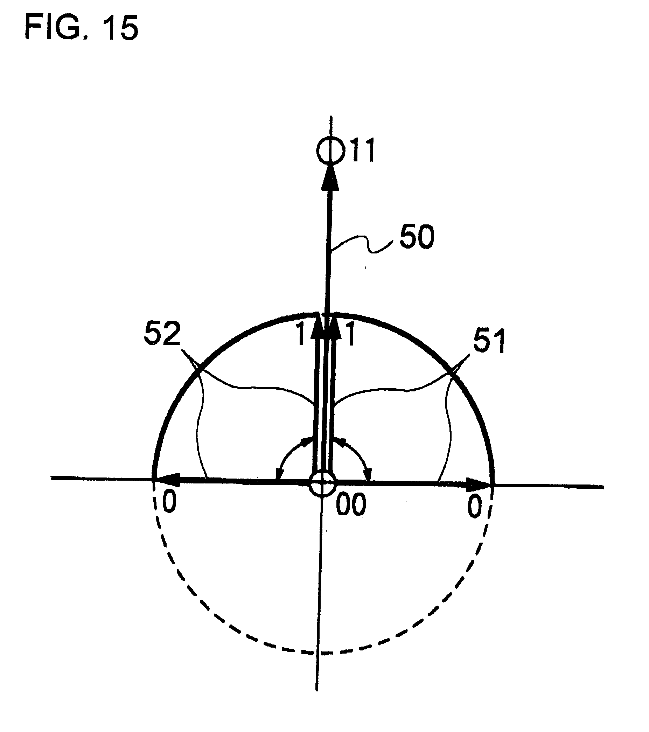

In order for the output interference light 50 to become a proper intensity-modulated signal, the phase of light 51 on the arm 1 and that of light 52 on the arm 2 are set as shown in Fig.15, in which the bold lines 51, 52 denote the trajectories of a phasor of the light on the arm 1 and a phasor of the light on the arm 2, respectively. On the other hand, the leading end of an interference vector at each symbol point (phase of discrimination) is denoted by an undarkened circle mark, and "0", "1" given for the arm phasors denote phasor positions for input electrical signals. For interference light, the phasor positions are denoted by "00", "11", because there are involved two input electrical signals.

In case the input electrical signals are both "0" for the arms 1 and 2, the two vectors are in opposite directions and hence nullify each other, there being no output interference light. This state is shown by "00" at the point of origin. In case the input electrical signals are both "1" for the arms 1 and 2, the two vectors are overlapped with and hence strengthen each other. Hence, the output interference light is in a state of "11".

In more general terms, the dual drive double-beam interferometer type intensity modulator, shown in Fig.1 (of Patent Document 1), is a sort of a device for intensity modulation whereby it is possible to obtain a light intensity level which is in meeting with an electrical signal level. Several sorts of comparable devices, inclusive of semiconductor light modulators (EA modulators), have now been put to practical use. These devices have so far been used mainly for intensity modulation of binary signals. It is not impossible with these intensity modulation devices to generate four-level intensity-modulated light which corresponds to a four-level electrical signal. However, as will be described subsequently, electrical signals of larger amplitudes are needed as driving signals for the light modulator, while the four-level electrical signal is an analog signal and hence needs to be amplified as attention is paid to signal distortion. This renders it technically difficult to achieve a four-level optical signal.

Patent Document 2 shows another technique for multilevel modulation in the state of light. With this technique, two sequences of bi-level intensity-modulated light are generated and are synthesized together such as to exhibit level differences generate a four-level optical signal, In this method, attention is to be paid so as not to produce beat noise caused by interference of the two beams. If the wavelengths of light beams to be combined together are sufficiently apart from each other, no interference is produced. However, it is tantamount to wavelength multiplexing in which two beams with different wavelengths are transmitted, and hence there is no real meaning of the multilevel modulation. If the wavelengths of the two beams are close to each other, polarized waves of the two beams must be perpendicular to each other. In the above Patent Document 1, polarized waves of the light beams are made orthogonal to each other by a polarization adjustment device.

Examples of other related art include Patent Documents 3 and 4.
[Patent Document 1] JP Patent Kokai Publication No. JP-A-10-332939
[Patent Document 2] JP Patent Kokai Publication No. JP-A-63-05633
[Patent Document 3] WO2002-033921
[Patent Document 4] JP Patent Kokai Publication No. JP-P2002-328347A
[Non- Patent Document 1] Sheldon Walklin et al., "Multilevel Signaling for Increasing the Reach of 10 Gb/s Lightwave Systems", Journal of Lightwave Technology Vol.17, No,11, pp.2235-2248, 1999

### SUMMARY

The following analyses are given by the present invention, The entire disclosures of the above mentioned Patent Documents and Non-Patent Document are incorporated herein by reference thereto.
The speed of modulation of the present-day trunk optical transmission apparatus is extremely high and is 10 Gb/s or even higher. In such electronic circuits, it is not that easy to implement an electronic circuit including linear input/ output characteristics that faithfully amplifies an analog signal. However, insofar as a digital signal is concerned, it is sufficient that the information on whether a signal is H (HIGH level) or L (LOW level) is transmitted. Therefore, a non-linear saturation circuit, which is a direct opposite of the linear circuit, is frequently used to implement the electronic circuit.

However, since the multilevel electrical signal is an analog signal, there is raised a problem that a saturation circuit, so far used, cannot be used for an electronic circuit that handles a multilevel signal. In particular, an electro-optical or opto-electrical transducer circuit or its peripheral circuit represents a circuit part that needs to handle a multilevel signal and hence is extremely difficult to implement. Specific examples of such circuit part include a driver circuit of a light modulator and a pre-amplifier circuit for a light receiving section. This circuit part is required to satisfy the difficult requirements in performance for linear amplification and for the ultra-high speed of operation simultaneously.

Particularly difficult to implement is a driving circuit of a light modulator which is in need of a large amplitude output. The difficulty in including an amplifier of a large amplitude perform a linear operation may be understood from many efforts that had to be made towards achieving a linear operation of an output amplifier in a radio transmission device. For these reasons, there is a demand raised for a method of generating a multilevel optical signal without handling a multilevel analog electrical signal.

If, in a method for conversion to a multilevel signal in an optical domain, the beat noise is to be suppressed, it has been necessary that the wavelengths of light beams to be combined together shall be separated by more than a preset level, or that two polarized waves shall be made to be orthogonal to each other. Separation of the optical wavelengths to be combined together by more than a preset amount is tantamount to wavelength multiplexing the outputs of two transmitters of different wavelengths. This may lead to a problem of degrading the frequency utilization efficiency, which is an index obtained on dividing the signal transmission rate by an occupied band.

In order for two polarized waves to be orthogonal to each other, adjustment by a polarized wave adjustment device is needed. However, to sufficiently lower the interference noise, it is necessary to keep the extinction ratio of the polarized wave at a very high level, There is thus raised a problem that, with the routine wave combiner, the extinction ratio of the polarized wave cannot be kept at a higher level, with the result that it is difficult to eliminate the interference noise.

It is therefore an exemplary object of the present invention to provide a method and an apparatus for light intensity modulation, whereby it is possible to generate a multilevel modulated optical signal from a single light beam (particularly from a single light source), without handling a multilevel electrical signal, and an optical transmission system employing the same,

According to the present invention, the following object is solved by an apparatus of claim 1 or 2, and a method of claim 5, 6, 8 or 9, respectively, Further features are given by dependent claims 3, 4 or 7.

According to a first exemplary aspect of the present invention, there is provided an apparatus for light intensity modulation. The apparatus comprises: a light source and branching means for branching a light beam from the light source into two light beams. The apparatus further comprises phase modulation means for phase modulating the branched light beams from the branching means based on two sequences of bi-level electrical signals. Combining means causes interference of the light beams from the phase modulation to produce an intensity-modulated output light beam. The phase modulation means provides the phase differences between the branched light beams approximately of 0, (3/8)π, (5/8)π and π, at symbol points of the electrical signals, depending on level combinations of the two sequences of the bi-level electrical signals.

According to a second exemplary aspect of the present invention, there is provided another apparatus for light intensity modulation. The another apparatus comprises a light source, and branching means for branching a light beam from the light source into two light beams. The apparatus further comprises intensity modulation means for intensity modulating the branched light beams from the branching means based on two sequences of bi-level electrical signals. Combining means combines the light beams from the intensity-modulation to produce an intensity-modulated (combined) output light beam. The combining means includes a polarization beam splitter that polarization-synthesizes the intensity-modulated light beams into a polarized and intensity-modulated light beam including level differences.
An optical transmission according to the present invention employs the light intensity modulator as set forth above.

According to a third exemplary aspect of the present invention, there is provided a method for light intensity modulation. The method comprises: a branching step of branching a light beam from a light source into two light beams; a phase modulation step of phase modulating the branched light beams from the branching step based on two sequences of bi-level electrical signals; and a combining step of combining through interference, the light beams from the phase modulating to produce an intensity-modulated output light beam. The phase modulating step provides phase differences between the branched light beams approximately of 0, (3/8)π, (5/8)π and π, at symbol points of the electrical signals, depending on level combinations of the two sequences of the bi-level electrical signals.

According to a fourth exemplary aspect of the present invention, there is provided another method for light intensity modulation. The another method comprises: a branching step of branching a light beam from the light source into two light beams; a intensity-modulating step of intensity-modulating the branched light beams from the branching means based on two sequences of the bi-level electrical signals; and a combining step of combining the light beams from the intensity-modulating to produce an intensity-modulated (combined) output light beam. The combining step includes a sub-step of providing level differences between the intensity-modulated branched light beams and a sub-step of polarization-synthesizing the light beams into a polarized and intensity-modulated light beam including level differences in the polarized state through a polarization beam splitter.

According to a fifth exemplary aspect of the present invention, there is provided a method for light intensity modulation. The method comprises: a branching step of branching a light beam into two light beams; a phase modulating step of phase modulating the branched light beams from the branching step based on two sequences of at least two level electrical signals; and a combining step of combining, through interference, the light beams from the phase modulating to produce an intensity-modulated output light beam. The phase modulating step provides phase differences between the branched light beams of at least four specified levels, at symbol points of the electrical signals, depending on level combinations of the two sequences of the at least two level electrical signals.

According to a sixth exemplary aspect of the present invention, there is provided a method for light intensity modulation, The method comprises: a branching step of branching a light beam into two light beams; a intensity-modulating step of intensity-modulating the branched light beams from the branching step based on two sequences of the at least two level electrical signals; and a combining step of combining the light beams from a intensity-modulating to produce an intensity-modulated (combined) output light beam. The combining step includes a sub-step of providing level differences between the intensity-modulated branched light beams, and a sub-step of synthesizing the light beams into a polarized and intensity-modulated light beam including level differences in the polarized state through a polarization beam splitter.

### BRIEF DESCRIPTIONS OF THE DRAWINGS

Fig.1 is a functional block diagram of a first exemplary embodiment of the present invention.
Fig.2 is a diagram showing an example of phase relationship between a light beam 51 on arm 1 and a light beam 52 on arm 2 of Fig.1.
Fig.3 is a diagram showing vectors (interference phasors) of an output interference light beam 50 in Fig.2.
Fig.4 is a graph showing the magnitude of vectors of a output interference light 50 in Fig.2.
Fig.5 is a graph showing an example of the relationship of correspondence between the two bi-level phase modulations and the four intensity levels of Fig.1.
Fig.6 is a graph showing another example of the relationship of correspondence between the two bi-level phase modulations and the four intensity levels of Fig.1.
Fig.7 is a diagram showing another example of phase relationship between a light beam 51 on arm 1 and a light beam 52 on arm 2 of Fig.1.
Fig.8 is a diagram showing a further example of phase relationship between a light 51 on arm 1 and a light 52 on arm 2 of Fig.1.
Fig.9 is a diagram showing vectors (interference phasors) of the output interference light 50 of Fig.8.
Fig.10 is a graph showing the magnitude of the vector of the output interference light 50 of Fig.8.
Fig.11 shows, in a tabulated form, the rule for code conversion for Fig.8.
Fig.12 is a functional block diagram showing a second exemplary embodiment of the present invention.
Fig.13 is a graph schematically showing operating waveforms at a block of Fig.12.
Figs.14A and 14B are schematic views for illustrating the schematics of a related multilevel modulator/ demodulator.
Fig.15 is a graph showing the phase relationship of light in case of employing a dual drive double-beam interferometer type light intensity modulator.

### EXEMPLARY EMBODIMENT

An exemplary embodiment of the present invention will now be described with reference to the accompanying drawings. Fig.1 is a functional block diagram of a first exemplary embodiment of the present invention, in which the present invention is implemented using a dual drive double-beam interferometer type light intensity modulator. Hence, the constitution of the first exemplary embodiment is substantially the same as that of a bi-level optical transmitter employing the related dual drive intensity modulator shown in Fig.1, with the difference being such that, in the present first exemplary embodiment, the phase of light on the arm 1 and that on the arm 2 are set as 51, 52 shown in Fig,2, respectively, A line indicated by 51 shows a trajectory of the phasor of light on the arm 1, while a line indicated by 52 shows a trajectory of the phasor of light on the arm 2. The leading ends of the vectors at symbol points (discrimination phases) are represented by undarkened circle marks.

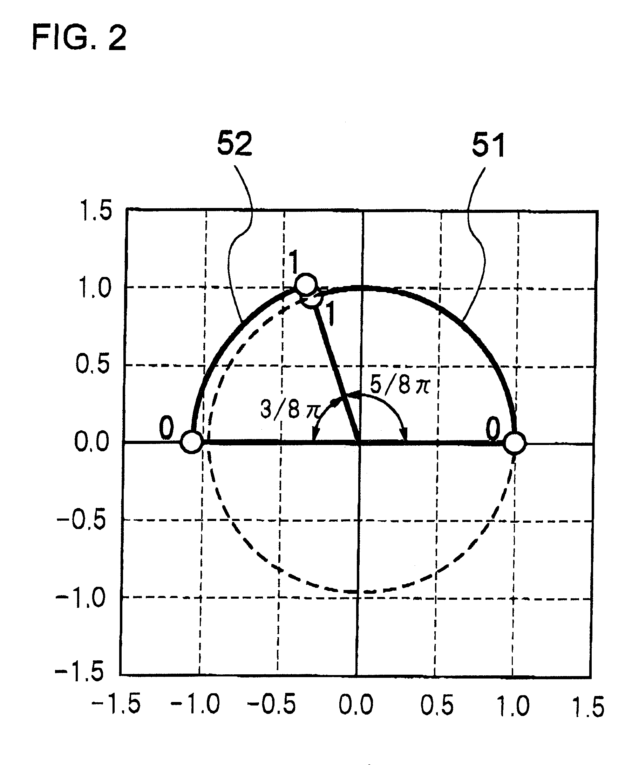

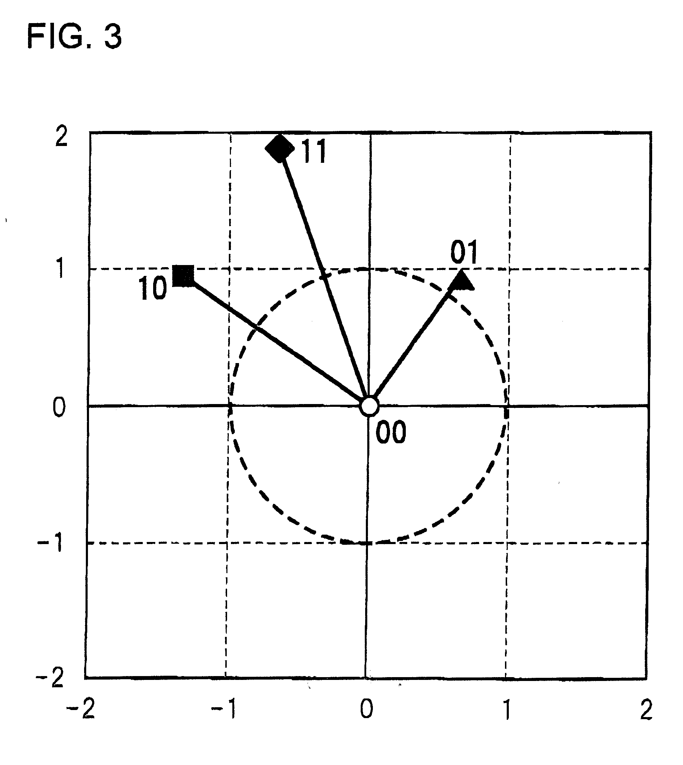

Up to now, for bi-level modulation, the amounts of phase rotation of the arms 1 and 2 are equal to each other, i.e., 1/2π, as sown in Fig. 15. In the present example, the levels of phase rotation are unbalanced, in order to effect four-level intensity modulation. In Fig.2, the phasor with the minimum modulation voltage is indicated by "0", while that with the maximum modulation voltage is indicated by "1". Since there are two channels of bi-level input signals, in distinction from Fig.15, a total of four states are represented. The combined (synthesized) vectors (interference light phasors) of the two channels are shown in Fig.3.

In case both arms are at "0" positions, the light on one of the arms and that on the other arm nullify each other, so that interference light 50 is approximately zero ("position of "00"). When only the arm 2 moves to the position "1", the interference light 50 is shifted to a position "01". If the arm 2 is at a position "0" and only the arm 1 is moved to a position "1", the interference light 50 is shifted to a position "10". When both the arms 1 and 2 are at "1", the interference light 50 is shifted to a position "11".

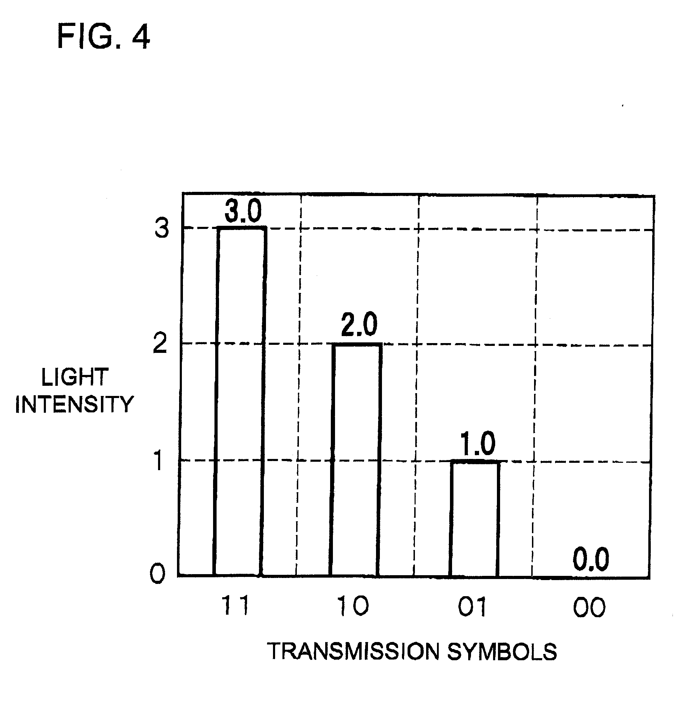

The power of the interference light 50 is the square of the length of the combined (synthesized) vector of the arms 1 and 2. This state is shown in Fig.4, from which it is seen that the power level is divided into three equal parts, so that there are generated four-level modulated signals, including 0. It is seen that the original input signal sequences A and B can be restored if the lines 51, 52 are construed to stand for a higher ordinate and a lower ordinate bit, respectively, at the time of receipt.

The power of two light waves that undergo interference with each other, becomes minimum and maximum with the phase differences equal to π and 0π, respectively. If the maximum amplitude is divided into three equal parts to generate two intermediate levels to implement four-level modulation, optimum phase differences are approximately (3/8)π and (5/8)π. Fig.2 shows these phase differences. In actuality, the points of optimum phase differences are slightly offset from the above levels due to non-linearity of the transfer function. However, since the difference is extremely small, the following explanation is based on the above levels for simplicity.

These four phase difference states are represented below, for example, by 0, (3/8)π, (5/8)π and π. Several combinations of generating the four states (levels) of phase differences may be thought of. The combination of Fig.2 is here termed "combination 1". This combination is one that can be understood most easily. No signal conversion is needed because two bi-level phase modulations directly yield the four intensity levels, as shown in Fig.5.

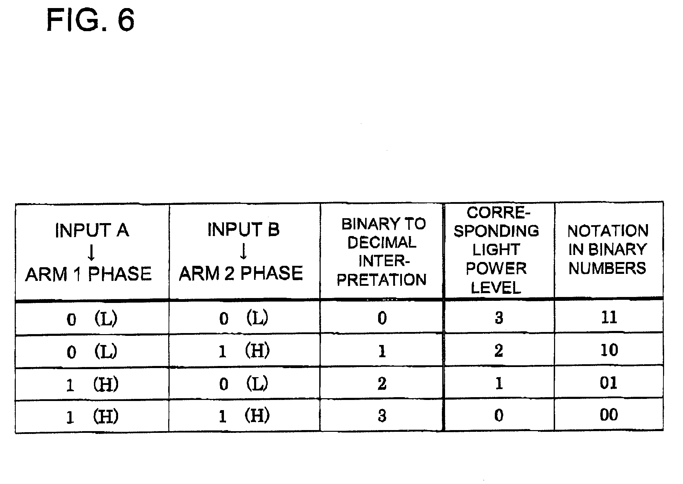

Taking the "combination 1" as an example, the existence of its variation patterns is now shown. It is seen that these are the same as the "combination 1". The first variation pattern is one in which the polarity of the voltage applied is reversed. The corresponding light power level is also reversed, as shown in Fig.6, However, if the bits of the binary output are logically inverted, the original signal may, of course, be obtained.

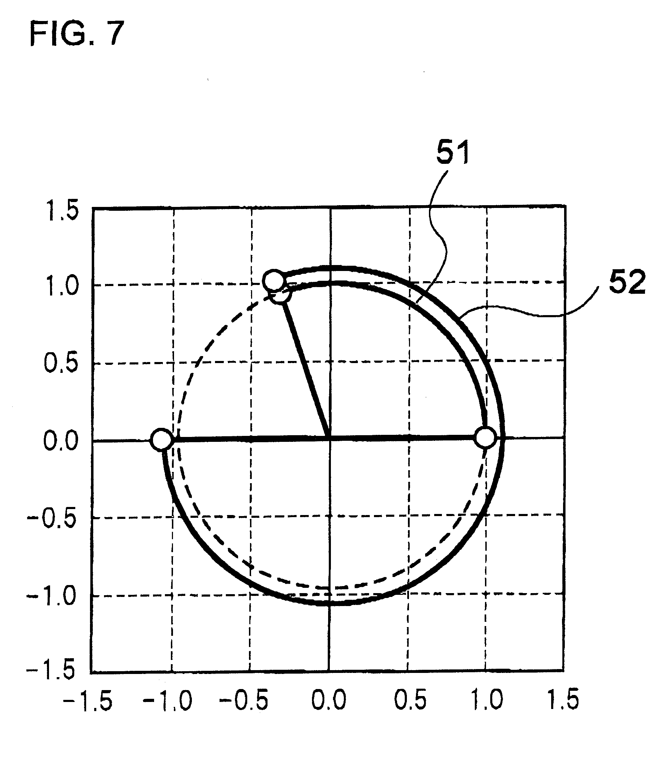

Next, the phase positions at the symbol points (discrimination points) of the signals are crucial in Fig.2, while the routes to achieve the transitions do not matter. Hence, a variety of variation patterns are possible. For example, Fig.7 shows an example in which the phases at the symbol points are the same as those shown in Fig.2, but the direction of rotation for achieving the phase transition of the light on the arm 2 is reversed from that shown in Fig.2.

There may, of course, be obtained the same four levels as those explained above, at the symbol points, even in case where the phase is rotated by whatever numbers of times in the course of phase transition, or the coordinate system in its entirety has been rotated, insofar as the phase difference between the two light waves at the symbol points remains the same as that shown in Fig.2.

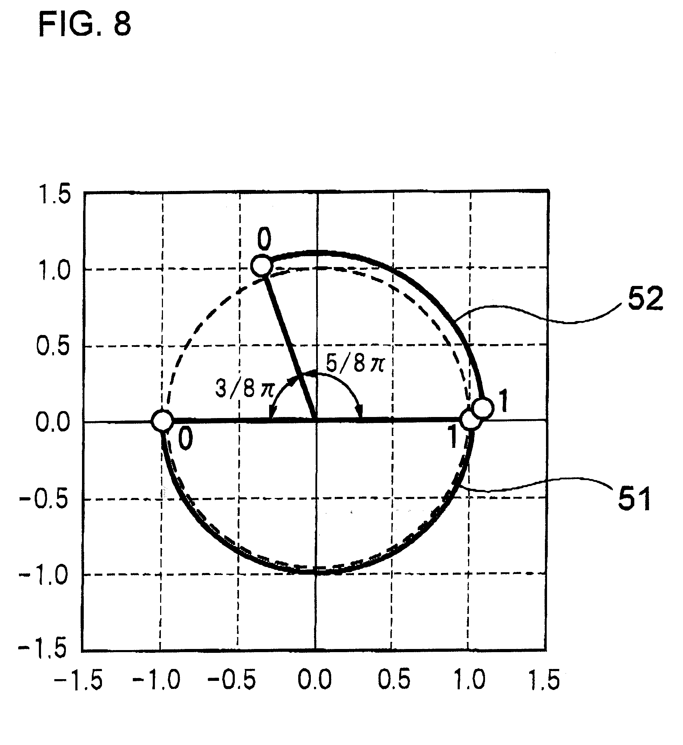

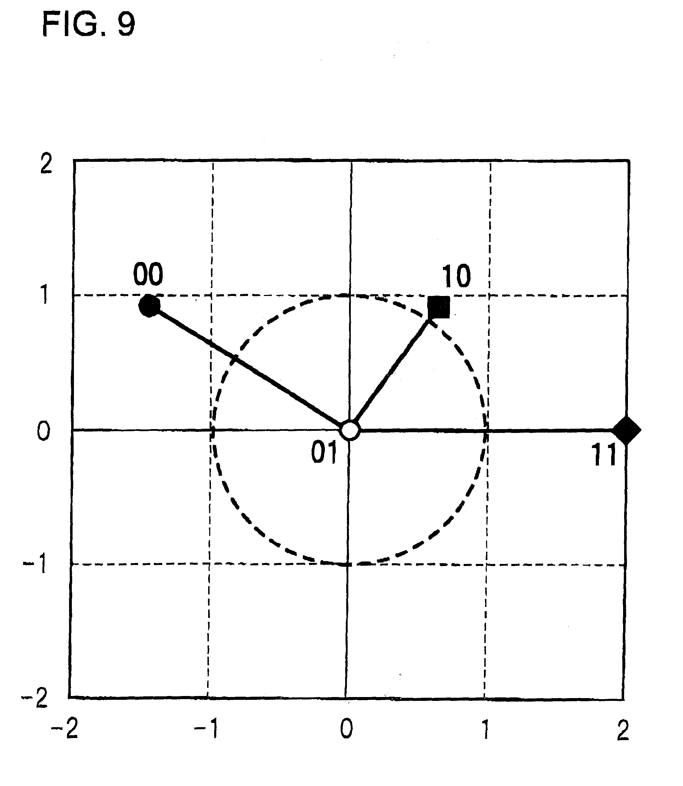

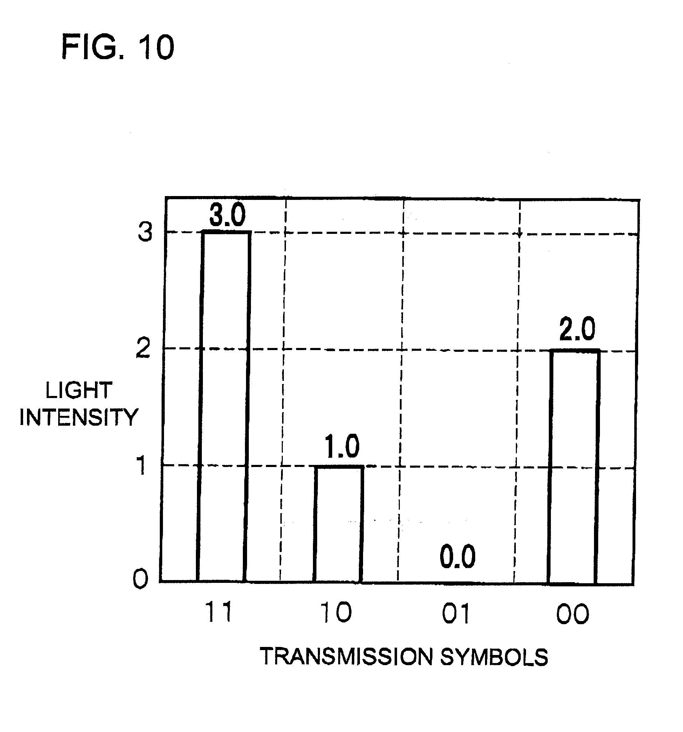

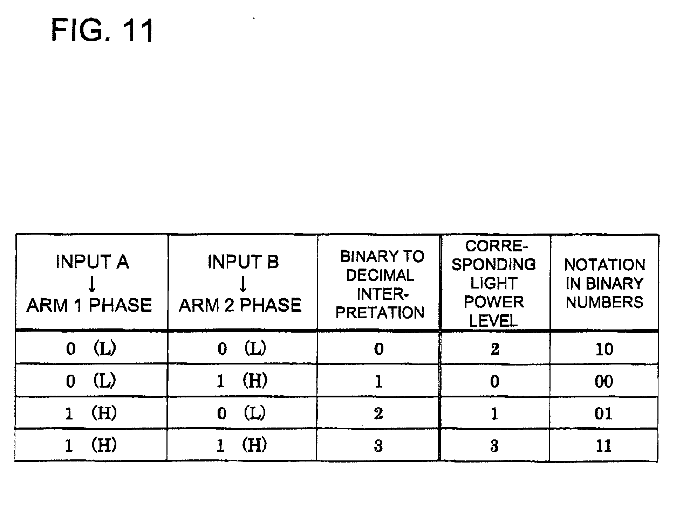

Figs.8 to 10 show the "combination 2". Even with this combination, it is possible to create four phase differences of 0, (3/8)π, (5/8)π and π by two bi-level phase modulations. However, code conversion is necessary, for this combination, because two bi-level phase modulations do not directly correspond to the four intensity levels in the binary system. Fig.11 shows a rule for such code conversion.

There are other variation patterns for phase setting so that the states of the four phase differences will be 0, (3/8)π, (5/8)π and π, It is to be noted that, since the code correspondence is 1:1 in these variation patterns, the original signal may be obtained upon code conversion.

A specified technique for achieving the phase setting shown in Fig.2, using the dual drive double-beam interferometer type light intensity modulator (unit), is now described. This sort of the modulator has, as a characteristic value, a voltage Vπ needed to change the phase by π. For light (beam) 51 on the arm 1 of Fig.2, the amplitude of the input electrical signal may be set such as to produce phase change of (5/8) π. That is, the driving amplitude for the arm 1 is set to (5/8) π. In similar manner, for the light (beam) 52 for the arm 2, the driving amplitude is set to (3/8)π. The direction of phase change is opposite to the direction of voltage change.

The driving amplitude may, in general, be adjusted by varying the output amplitudes of the drivers (amplifiers) 11, 12 that drive the modulator. However, it may also be achieved by adjusting the phase modulation efficiency of the phase modulation sections by some technique or other.

What is needed for clearly defining the driving conditions, as is the case with the driving amplitude, is the bias. It has been seen that, with the example of Fig.2, the light 51 from the arm 1 and the light 52 from the arm 2 nullify each other when the two input voltages are of the minimum levels, while the light 51 from the arm 1 and the light 52 from the arm 2 strengthen each other when the two input voltages are of the maximum levels. It is therefore sufficient to statically generate one of these points for the time being to define the bias. With the present invention, it is sufficient that the bias is such that the relative phase of light from one of the arms and light from the other arm is kept at a constant level. It is therefore sufficient that a phase modulation section is provided in an optional one of the arms and that one DC (direct current)-like bias adjustment voltage is applied to this phase modulation section.

Although the exemplary embodiment employing the related dual drive double-beam interferometer type light intensity modulator has been described, it is possible to use other constitutions provided that two light beams are subjected to interference for intensity modulation and that the phase difference between the light beams undergoing the interference may be changed to 0, (3/8)π, (5/8)π and π.

For example, the phase modulation sections 41, 42 (cumulatively "phase modulation unit") are provided on the arms 1, 2, respectively, of the interferometer in Fig.1. It is however possible to place the two phase modulation sections in series with each other on one of the arms and to place none of them on the other arm. In this case, there would be no necessity to explain the fact that an operation similar to that described above may be achieved in case where distinct binary signals for modulation are applied to the series-connected phase modulation sections.

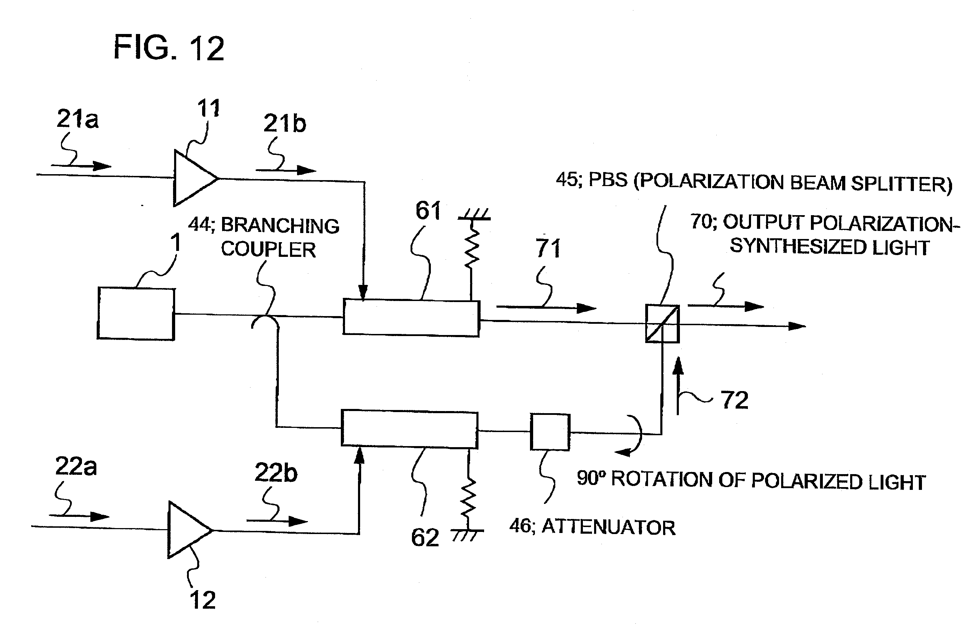

A second exemplary embodiment of the present invention will now be described. The present exemplary embodiment is directed to a constitution employing polarization division multiplexing. Fig.12 depicts a functional block diagram in which the parts equivalent to those of Fig.1 are depicted by the same reference numerals. In Fig.12, the light from the light source 1 is branched into two beams by a branching (splitting) coupler 44, The resulting two light beams are subjected to bi-level intensity modulation, in intensity-modulation sections 61, 62, (may be termed cumulatively as "intensity-modulating unit"), by the bi-level electrical signals 21, 22 of the sequences A and B, respectively. The resulting light beams are differentiated in signal levels by an attenuator 46 and are combined (polarization-synthesized) together by a PBS (polarization beam splitter) 45 in the polarized state.

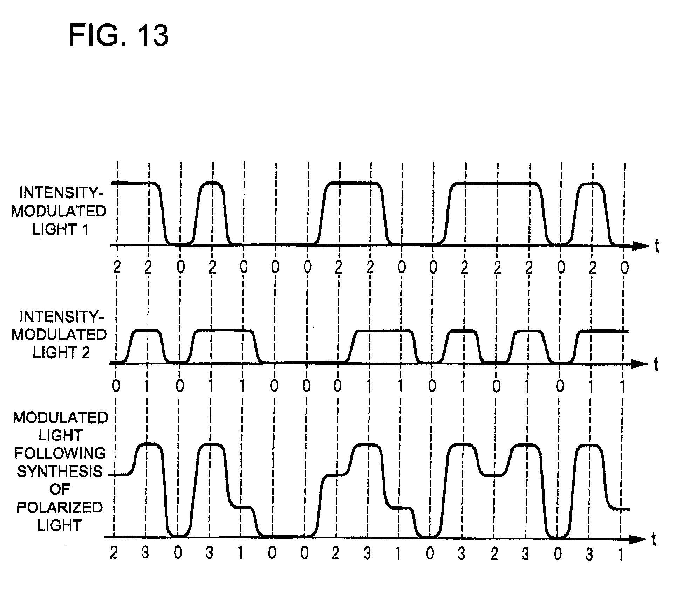

Fig.13 shows intensity-modulated waveforms in the case of an exemplary embodiment of Fig.12, Here, the consequent four intensity levels are schematically represented by 0, 1, 2 and 3 for ease in understanding. The polarized intensity-modulated light (beam) 71 (light on the arm 1) and the intensity-modulated light (beam) 72 (light on the arm 2) are combined (polarization-synthesized) together with an intensity ratio of approximately 1:2 to yield the four-level intensity-modulated output light 70.

For synthesis of polarized light (beams), a PBS 45 is used. Up to the stage of the synthesis in the state of polarized light, the optical fiber is constituted by the light waveguide which is a polarization maintaining fiber or an equivalent optical waveguide. Since the optical circuit up to the PBS 45 is constituted by a polarized light retention system, it is unnecessary to adjust the state of the polarized light by a manual operation. Since the light (beam) from a single light source is split into a plurality of light beams (here, too) and the so split light parts (beam) are ultimately combined into sole light, the wavelengths of the two polarized light beams are wholly identical with each other. Hence, the frequency utilization efficiency is not deteriorated, while the effect of chromatic dispersion is minimized.

For providing the level difference, the simplest method is to provide an attenuator for level adjustment 46 upstream of the wave combiner. As another method, it would also be effective to split (branch) the light (beam) from the light source not into equal amounts but to at a weighted branching (distribution) ratio.

A third exemplary embodiment of the present invention is now described. With this third exemplary embodiment, the modulating electrical signal is RZ (return-to-zero) coded in contrast to the above-described first and second exemplary embodiments in which the modulating electrical signal is NRZ (non-return-to-zero) coded. To obtain the RZ code, it is sufficient to provide once a zero level between bits (from one bit to another bit) of the NRZ code. As a simple method for conversion, it is sufficient that the bit rate is doubled and a 2:1 selector is used, with one of the inputs being NRZ code data as before and with the other input being grounded.

With the four-level system (i.e., two parallel sequences each of bi-levels), the bit rate per sequence is halved as compared to the original (inherent) bi-level system. The RZ coding simply reverts to the original bit rate and hence is ready to implement.

Several merits of the RZ coding have so far been recognized. These merits may be exemplified by higher receiver sensitivity (higher OSNR tolerance), higher tolerance against non-linearity, higher tolerance against polarization mode dispersion and ease in clock regeneration on the receiver side. There are, however, certain demerits specific to the RZ coding. These are, for example, a slightly more complicated constitution of the transmission section compared to the case of NRZ coding, lower tolerance against polarization mode dispersion, and a broader spectral width of the modulated light. For these reasons, the RZ coding is not necessarily superior to the NRZ system, and is used in case the merits of the RZ system outweigh the demerits from the exhaustive designing viewpoint of the transmission system.

If, in the above-described exemplary embodiments of the present invention, the modulated driving signals 21a, 21b are RZ coded, the electrical signals thereof remain binary signals. Hence, the objects and the meritorious effects of the present invention that a multilevel optical signal may be generated with the modulating driving signals remaining to be binary signals. Additionally, the meritorious effect proper to the RZ coding may be retained.

According to further modes, the method may be applied in general to any light beam, even not limited to the light beam directly emitted from a light source. Further, the "bi-level electrical signals" may be at least two-level electrical signals for the phase modulating, The phase differences between the branched light beams may be set to at least four specified levels (at least three intervals) in association with desired phase-differences in the resulting unified (combined/synthesized) light beam.

The meritorious effects of the present invention are summarized as follows.
The present invention gives rise to a meritorious effect that a multilevel modulated optical signal may be generated without using an electronic circuit handling a multilevel electrical signal to implement an optical transmission device by solely a saturation amplifier which is a technique already established in the related art.
It should be noted that other objects, features and aspects of the present invention will become apparent in the entire disclosure and that modifications from the disclosed embodiments may be done without departing the scope of the present invention claimed as appended herewith.
Also it should be noted that any combination of the disclosed and/or claimed elements, matters and/or items may fall under the modifications aforementioned.

## Claims

1. An apparatus for light intensity modulation comprising:
a light source;
branching means for branching a light beam from said light source into two light beams;
phase modulation means for phase modulating the branched light beams from said branching means based on two sequences of bi-level electrical signals; and
combining means for causing interference of the light beams from said phase modulation to produce an intensity-modulated output light beam; wherein
said phase modulation means provides phase differences between the branched light beams approximately of 0, (3/8)π, (5/8)π and π, at symbol points of said electrical signals, depending on level combinations of said two sequences of said bi-level electrical signals.

2. An apparatus for light intensity modulation comprising:
a light source;
branching means for branching a light beam from said light source into two light beams;
intensity modulation means for phase modulating the branched light beams from said branching means based on two sequences of bi-level electrical signals; and
combining means for combining the light beams from the intensity modulation to produce an intensity-modulated output light beam; wherein
said combining means includes a polarization beam splitter that polarization-synthesizes the phase modulated light beams into a polarized and intensity-modulated light beam with level differences.

3. The apparatus for light intensity modulation according to claims 1 or 2 wherein said bi-level electrical signals are RZ coded signals.

4. An optical transmission system comprising the apparatus for light intensity modulation according to any one of claims 1 to 3.

5. A method for light intensity modulation, comprising:
a branching step of branching a light beam from a light source into two light beams;
a phase modulating step of phase modulating the branched light beams from said branching step based on two sequences of bi-level electrical signals; and
a combining step of combining, through interference, the light beams from said phase modulating to produce an intensity-modulated output light beam; wherein
said phase modulating step provides phase differences between said branched light beams approximately of 0, (3/8)π, (5/8)π and π, at symbol points of said electrical signals, depending on level combinations of said two sequences of said bi-level electrical signals.

6. A method for light intensity modulation, comprising:
a branching step of branching a light beam from a light source into two light beams;
an intensity-modulating step of intensity-modulating the branched light beams from said branching step based on two sequences of bi-level electrical signals; and
a combining step of combining the light beams from said intensity-modulating to produce an intensity-modulated output light beam;
wherein said combining step includes: a sub-step of providing level differences between said intensity-modulated branched light beams, and a sub-step of polarization-synthesizing said light beams into a polarized and intensity-modulated light beam including level differences through a polarization beam splitter.

7. The method for light intensity modulation according to claim 5 or 6 wherein said bi-level electrical signals are RZ coded signals.

8. A method for light intensity modulation, comprising:
a branching step of branching a light beam into two light beams;
a phase modulating step of phase modulating the branched light beams from said branching step based on two sequences of at least two level electrical signals; and
a combining step of combining, through interference, the light beams from said phase modulating to produce an intensity-modulated output light beam; wherein
said phase modulating step provides phase differences between said branched light beams of at least four specified levels, at symbol points of said electrical signals, depending on level combinations of said two sequences of said at least two level electrical signals.

9. A method for light intensity modulation, comprising:
a branching step of branching a light beam into two light beams;
an intensity-modulating step of intensity-modulating the branched light beams from said branching step based on two sequences of at least two level electrical signals; and
a combining step of combining the light beams from said intensity-modulating to produce an intensity-modulated output light beam;
wherein said combining step includes: a sub-step of providing level differences between said intensity-modulated branched light beams, and a sub-step of polarization-synthesizing said light beams into a polarized and intensity-modulated light beam including at least four level differences in the polarized state through a polarization beam splitter.
